(19) Europäisches Patentamt
European Patent Office
Office européen des brevets

(11) **EP 4 654 688 A1**

(12) **EUROPEAN PATENT APPLICATION**
published in accordance with Art. 153(4) EPC

(43) Date of publication:
26.11.2025 Bulletin 2025/48

(51) International Patent Classification (IPC):
*H04W 64/00* (2009.01)

(21) Application number: 23941311.5

(22) Date of filing: 07.11.2023

(86) International application number:
PCT/CN2023/130304

(87) International publication number:
WO 2024/255089 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.06.2023 CN 202310725924

(71) Applicants:
• Zhejiang Geely Holding Group Co., Ltd.
Hangzhou, Zhejiang 310051 (CN)

• Geely Automobile Research Institute
(Ningbo) Co., Ltd.
Ningbo, Zhejiang 315336 (CN)

(72) Inventor: CHEN, Guoan
Ningbo, Zhejiang 310051 (CN)

(74) Representative: Boult Wade Tennant LLP
Salisbury Square House
8 Salisbury Square
London EC4Y 8AP (GB)

(54) **VEHICLE KEY POSITIONING METHOD, AND APPARATUS AND STORAGE MEDIUM**

(57) Provided by the present application are a vehicle key positioning method, an apparatus and a storage medium. The method includes: based on respective ranging signals between a plurality of positioning anchor points and a key of a vehicle, determining respective distances between the plurality of positioning anchor points and the key; if one reference anchor point is determined from the plurality of positioning anchor points based on the respective distances between the plurality of positioning anchor points and the key, correcting a distance between a positioning anchor point adjacent to the reference anchor point and the key, so as to obtain a corrected distance, where the reference anchor point indicates that a transmission mode of a ranging signal between the reference anchor point and the key is line of sight wireless transmission LOS; performing positioning calculation on a distance between the reference anchor point and the key, and the corrected distance to obtain final position information of the key relative to the vehicle; and executing a preset action corresponding to both the final position information of the key relative to the vehicle and a control instruction sent by the key. The method in the present application solves the problem of inaccurate positioning in the key positioning method in the prior art.

FIG. 1a

FIG. 1b

## Description

The present application claims priority to Chinese patent application No. 202310725924.7, filed with the China National Intellectual Property Administration on June 16, 2023, and entitled "Vehicle Key Positioning Method, Apparatus and Storage Medium", which is hereby incorporated by reference in its entirety.

## TECHNICAL FIELD

The present application relates to the field of communication technology and, in particular, to a vehicle key positioning method, an apparatus and a storage medium.

## BACKGROUND

Senseless control technology such as Passive Entry Passive Start (Passive Entry Passive Start, PEPS) enables a user to control a vehicle in a senseless manner before entering the vehicle.

The user's senseless control for a vehicle is specifically as follows: when a key of the vehicle carried by the user is within a preset distance range outside the vehicle body, a vehicle body control module (body control module, BCM) of the vehicle establishes communication with the key; the BCM positions the key and obtains position information of the key relative to the vehicle; based on the position information of the key relative to the vehicle and a control instruction from the key, the BCM executes a preset action corresponding to both the position information of the key and the control instruction from the key. In the prior art, the method for positioning the key by the BCM is mainly as follows: the BCM performs position calculation on distance information between the key and all positioning anchor points of the vehicle obtained by the BCM by using the least squares method, so as to obtain position information of the key relative to the vehicle.

In the key positioning method in the prior art, there is a problem of inaccurate positioning, which results in the inability to execute a preset action.

## SUMMARY

The present application provides a vehicle key positioning method, an apparatus and a storage medium to solve the problem of inaccurate positioning in the key positioning method in the prior art.

In a first aspect, the present application provides a vehicle key positioning method, including:

after a vehicle completes a communication connection with a key of the vehicle, determining respective distances between a plurality of positioning anchor points of the vehicle and the key, based on respective ranging signals between the plurality of positioning anchor points and the key;

if one reference anchor point is determined from the plurality of positioning anchor points based on the respective distances between the plurality of positioning anchor points and the key, correcting a distance between a positioning anchor point adjacent to the one reference anchor point and the key to obtain a corrected distance; where the reference anchor point indicates that a transmission mode of a ranging signal between the reference anchor point and the key is line-of-sight wireless transmission LOS;

performing positioning calculation on a distance between the one reference anchor point and the key and the corrected distance to obtain final position information of the key relative to the vehicle;

executing a preset action corresponding to both the final position information of the key relative to the vehicle and a control instruction issued by the key.

Optionally, the positioning anchor point adjacent to the one reference anchor point is a first adjacent anchor point;

the correcting the distance between the key and the positioning anchor point adjacent to the one reference anchor point to obtain the corrected distance includes:

performing positioning calculation on the distance between the one reference anchor point and the key, a distance between the first adjacent anchor point and the key, and a distance between the one reference anchor point and the first adjacent anchor point, to obtain first position information of the key relative to the vehicle;

performing correction calculation on the distance between the first adjacent anchor point and the key using a preset correction value corresponding to the first position information to obtain the corrected distance of the first adjacent anchor point.

Optionally, the performing positioning calculation on the distance between the one reference anchor point and the key and the corrected distance to obtain the final position information of the key relative to the vehicle includes:

if the first position information is located in a preset first area, performing positioning calculation on the distance between the one reference anchor point and the key, the corrected distance of the first adjacent anchor point, and the distance between the one reference anchor point and the first adjacent anchor point to obtain a first positioning result of the key; where the first area indicates that an accuracy of a final position of the key is related to one adjacent positioning anchor point of the one reference anchor point;

determining the first positioning result as the final position information of the key relative to the vehicle.

Optionally, another positioning anchor point adjacent to the one reference anchor point is a second adjacent anchor point;

the performing positioning calculation on the distance between the one reference anchor point and the key and the corrected distance to obtain the final position information of the key relative to the vehicle includes:

if the first position information is located in a preset second area, performing positioning calculation on the distance between the one reference anchor point and the key, and a distance between the second adjacent anchor point and the key, and a distance between the one reference anchor point and the second adjacent anchor point, so as to obtain second position information of the key relative to the vehicle; where the second area indicates that the accuracy of the final position of the key is related to two adjacent positioning anchor points of the one reference anchor point;

performing correction calculation on the distance between the second adjacent anchor point and the key using a preset correction value corresponding to the second position information to obtain a corrected distance of the second adjacent anchor point;

performing positioning calculation on the distance between the one reference anchor point and the key, the corrected distance of the second adjacent anchor point, and the distance between the one reference anchor point and the second adjacent anchor point to obtain a second positioning result of the key;

determining an average value of the first positioning result and the second positioning result as the final position information of the key relative to the vehicle.

Optionally, the performing positioning calculation on the distance between the one reference anchor point and the key, the distance between the first adjacent anchor point and the key, and the distance between the one reference anchor point and the first adjacent anchor point to obtain the first position information of the key relative to the vehicle includes:

determining a first local coordinate system by taking a line connecting the one reference anchor point and the first adjacent anchor point as an X-axis and taking the one reference anchor point or the first adjacent anchor point as a coordinate origin;

determining a first local coordinate of the key in the first local coordinate system based on the distance between the one reference anchor point and the key, the distance between the first adjacent anchor point and the key, and the distance between the one reference anchor point and the first adjacent anchor point;

performing coordinate system transformation processing on the first local coordinate to obtain a first coordinate of the key in a preset coordinate system of the vehicle, where the first coordinate is the first position information of the key relative to the vehicle.

Optionally, the performing positioning calculation on the distance between the one reference anchor point and the key, the corrected distance of the first adjacent anchor point, and the distance between the one reference anchor point and the first adjacent anchor point to obtain the first positioning result of the key includes:

determining a first local coordinate system by taking a line connecting the one reference anchor point and the first adjacent anchor point as an X-axis and taking the one reference anchor point or the first adjacent anchor point as a coordinate origin;

determining a first corrected local coordinate of the key in the first local coordinate system based on the distance between the one reference anchor point and the key, the corrected distance of the first adjacent anchor point, and the distance between the one reference anchor point and the first adjacent anchor point;

performing coordinate system transformation processing on the first corrected local coordinate to obtain a first corrected coordinate of the key in a preset coordinate system of the vehicle;

the performing positioning calculation on the distance between the one reference anchor point and the key, the corrected distance of the second adjacent anchor point, and the distance between the one reference anchor point and the second adjacent anchor point to obtain the second positioning result of the key includes:

determining a second local coordinate system by taking a line connecting the one reference anchor point and the second adjacent anchor point as an X-axis and taking the one reference anchor point or the second adjacent anchor point as a coordinate origin;

determining a second corrected local coordinate of the key in the second local coordinate system based on the distance between the one reference anchor point and the key, the corrected distance of the second adjacent anchor point, and the distance between the one reference anchor point and the second adjacent anchor point;

performing coordinate system transformation processing on the second corrected local coordinate to obtain a second corrected coordinate of the key in the preset coordinate system of the vehicle.

Optionally, the determining the average value of the first positioning result and the second positioning result as the final position information of the key relative to the vehicle includes:

averaging the first corrected coordinate and the second corrected coordinate to obtain a final coordinate of the key in the preset coordinate system of the vehicle.

In a second aspect, the present application provides a control apparatus, including: a collection module, a processing module and an operation module; where,

the collection module is configured to after a vehicle completes a communication connection with a key of the vehicle, determine respective distances between a plurality of positioning anchor points of the vehicle and the key, based on respective ranging signals between the plurality of positioning anchor points and the key;

the processing module is configured to: if one reference anchor point is determined from the plurality of positioning anchor points based on the respective distances between the plurality of positioning anchor points and the key, correct a distance between the key and a positioning anchor point adjacent to the one reference anchor point to obtain a corrected distance; where the reference anchor point indicates that a transmission mode of a ranging signal between the reference anchor point and the key is line-of-sight wireless transmission LOS;

the processing module is further configured to perform positioning calculation on a distance between the one reference anchor point and the key and the corrected distance to obtain final position information of the key relative to the vehicle;

the operation module is configured to execute a preset action corresponding to both the final position information of the key relative to the vehicle and a control instruction issued by the key.

In a third aspect, the present application provides a control apparatus, the apparatus including:

a processor and a memory; where,
the memory stores executable instructions executable by the processor; and
the processor executes the executable instructions stored in the memory, so that the processor executes the method as described above.

In a fourth aspect, the present application provides a storage medium, the storage medium stores computer-executable instructions, and the computer-executable instructions, when executed by a processor, are used to implement the method as described above.

In the vehicle key positioning method, the apparatus and the storage medium provided by the present application, a reference anchor point of LOS transmission is determined from a plurality of positioning anchor points; if the number of the reference anchor points is one, positioning calculation is performed on a distance between the reference anchor point of LOS transmission and the key and a corrected distance between a positioning anchor point adjacent to the one reference anchor point of NLOS transmission and the key, to obtain final position information of the key relative to the vehicle, thereby improving the positioning accuracy of the key, so that the final position information of the key relative to the vehicle is consistent with an actual position of the key relative to the vehicle. The present application solves the problem of inaccurate positioning in the key positioning method in the prior art.

## BRIEF DESCRIPTION OF DRAWINGS

The accompanying drawings, which are incorporated in and constitute a part of this specification, illustrate embodiments consistent with the present application and, together with the description, serve to explain the principles of the present application.

FIG. 1a is a schematic diagram of an existing key positioning scenario.

FIG. 1b is a schematic diagram of a ranging signal transmission scenario between an existing key and a vehicle positioning anchor point.

FIG. 2 is a first schematic diagram of a vehicle key positioning scenario provided by an embodiment of the present application.

FIG. 3 is a schematic diagram of positioning calculation process provided by an embodiment of the present application.

FIG. 4 is a second schematic diagram of a vehicle key positioning scenario provided by an embodiment of the present application.

FIG. 5 is a schematic diagram of a local coordinate system provided by an embodiment of the present application.

FIG. 6 is a third schematic diagram of a vehicle key positioning scenario provided by an embodiment of the present application.

FIG. 7 is a first flowchart of a vehicle key positioning process provided by an embodiment of the present application.

FIG. 8 is a schematic diagram of determining a preset correction value provided by an embodiment of the present application.

FIG. 9 is a schematic diagram of the relationship between a first area, a second area and an anchor point preset area provided by an embodiment of the present application.

FIG. 10 is a second flowchart of a vehicle key positioning process provided by an embodiment of the present application.

FIG. 11 is a first structural diagram of a control apparatus provided by an embodiment of the present application.

FIG. 12 is a second structural diagram of a control apparatus provided by an embodiment of the present application.

The above drawings have shown clear embodiments of the present application, which will be described in more detail later. These drawings and text descriptions are not intended to limit the scope of the present application in any way, but to illustrate the concept of the present application to those skilled in the art by referring to specific embodiments.

**DESCRIPTION OF EMBODIMENTS**

In order to make the purpose, technical solution and advantages of the embodiments of the present application clearer, the technical solution in embodiments of the present application will be clearly and completely described below with reference to the drawings in the embodiments of the present application. Obviously, the described embodiments are part of the embodiments of the present invention, not all of the embodiments. Based on the embodiments in the present application, all other embodiments obtained by those of ordinary skill in the art without creative work are within the protection scope of the present application.

Senseless control technology such as Passive Entry Passive Start (PEPS) enables a user to control a vehicle in a senseless manner before entering the vehicle.

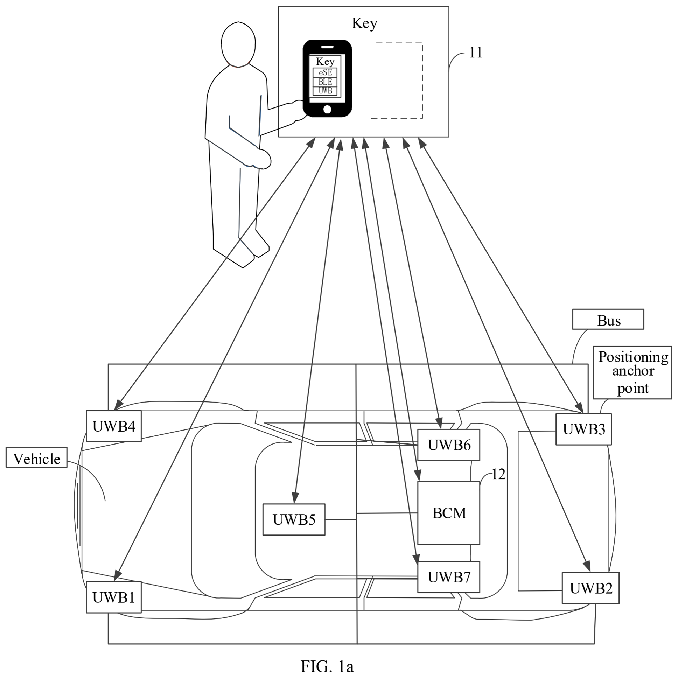

FIG. 1a is a diagram of an existing key positioning scenario. As shown in FIG. 1a, typically, positioning anchor points are deployed on a vehicle, and the positioning anchor points on the vehicle are, for example, UWB anchor points such as UWB1, UWB2, UWB3, UWB4, UWB5, UWB6, UWB7 etc., as shown in FIG. 1a. As shown in FIG. 1a, UWB1, UWB2, UWB3, and UWB4 are all located outside a vehicle body; for example, UWB1 and UWB4 are respectively located at both ends of a front bumper of the vehicle, and UWB2 and UWB3 are respectively located at both ends of a rear bumper. UWB5, UWB6, and UWB7 are all located inside the vehicle body. A vehicle body controller (Body Control Module, referred to as: BCM) 12 is also deployed on the vehicle. The BCM 12 continuously broadcasts a BLE broadcast signal through a Bluetooth (Bluetooth Low Energy, referred to as: BLE) module on the BCM 12. A key 11 of the vehicle detects the BLE broadcast signal of the vehicle in real time.

The specific process of a user's senseless control of the vehicle is as follows: if the key 11 detects and identifies that a received signal strength indication (Received Signal Strength Indication, RSSI) of a BLE broadcast signal of an associated vehicle reaches a preset communication threshold, the key 11 sends a communication connection request to the BCM 12 of the associated vehicle; then, the BCM 12 responds to the communication connection request sent by the key 11, and establishes communication with the key 11 after successful authentication, so as to complete a communication connection between the vehicle and the corresponding key 11; then, the BCM 12 uses the BLE RSSI between the BCM 12 and the key 11 as a ranging signal to continuously measure a distance from the key 11, to obtain a Bluetooth ranging distance of the key 11 relative to the vehicle. If the Bluetooth ranging distance is less than or equal to a first distance threshold, the BCM 12 controls positioning apparatuses at a plurality of positioning anchor points of the vehicle to initiate a ranging function of each positioning apparatus, so that a Bluetooth ranging mode is converted to an ultra-wideband (Ultra Wide Band, referred to as: UWB) time of flight (Time of Flight, referred to as: ToF) ranging mode of the positioning apparatus. The positioning apparatus may be, for example, a UWB apparatus including a UWB chip or a UWB module. The positioning apparatus and the BCM 12 may be connected via a bus.

The key 11 of the vehicle may be a physical key or a virtual key on a user terminal.

After the BCM 12 converts the Bluetooth RSSI ranging mode into the UWB ToF ranging mode, the BCM 12 positions the key 11 as follows: the BCM 12 determines distance information between each positioning anchor point corresponding to each positioning apparatus and the key 11 based on a ranging signal between each positioning apparatus and the key 11; then, the BCM 12 uses the least squares method to perform positioning calculation on a plurality of determined distance information to obtain position information of the key 11 relative to the vehicle to position the key 11, where the position information of the key 11 relative to the vehicle may be a coordinate of the key 11 in the preset coordinate system of the vehicle; then, based on the position information of the key relative to the vehicle and a control instruction issued by the key, the BCM12 executes a preset action corresponding to both the position information of the key and the control instruction from the key, where the preset action is such as controlling the vehicle so that the vehicle automatically drives out of a garage and arrives at a predetermined position.

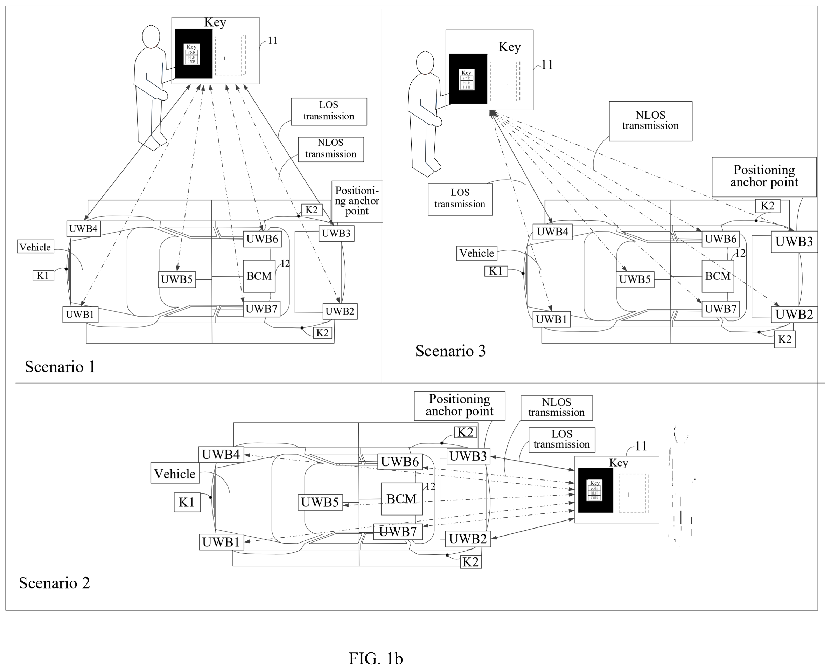

As shown in FIG. 1b, a key 11 is outside a vehicle body, and a transmission mode of a ranging signal between the key 11 and a positioning anchor point outside the vehicle body includes a Line of Sight wireless transmission (Line of Sight, referred to as LOS) and a Non-Line of Sight wireless transmission (Non-Line of Sight, referred to as NLOS). Due to the obstruction of the vehicle body, there is no direct path for the ranging signal between the key 11 and the positioning anchor point inside the vehicle body, so that the transmission mode of the ranging signal is NLOS transmission. The NLOS transmission of the ranging signal between the key 11 and the positioning anchor point indicates that the ranging signal is reflected and/or diffracted by a reflector during a transmission between the key 11 and the positioning anchor point, and the transmission of the ranging signal does not meet a line of sight condition and thus there is no direct path. The reflector may be, for example, the ground, a metal or non-metal vehicle body. The ranging signal is reflected and/or diffracted by the reflector, and the RSSI of the ranging signal is also weakened due to factors such as surface conductivity, roughness, and reflectivity of the reflector. After the ranging signal is reflected and/or diffracted by a reflector during the transmission, a distance between the key 11 and the positioning anchor point determined based on the ranging signal is often greater than an actual distance between the key 11 and the positioning anchor point. Therefore, the distance information between the key 11 and all the positioning anchor points of the vehicle contains inaccurate distance information.

In embodiments of the present application, NLOS is also referred to as NLOS transmission, and LOS is also referred to as LOS transmission. An actual distance between two points refers to a straight-line distance between the two points. For example, an actual distance between the key 11 and the positioning anchor point UWB1 is the straight-line distance between the key 11 and UWB1.

Since the accuracy of the least squares solution is closely related to the amount of data used for the solution and the accuracy of the data, in order to ensure the amount of data used for the least squares solution, in the existing key positioning method distance information between the key 11 and all positioning anchor points is used for the position solution of the key 11, resulting in a large deviation between the position information of the key 11 relative to the vehicle and an actual position of the key 11 relative to the vehicle. In the key positioning method in the prior art, there is a problem of inaccurate positioning, which in turn causes the key position calculated by the vehicle to be inconsistent with the actual position of the key, resulting in a situation where the key 11 is located at a position corresponding to a preset action, and after a control instruction corresponding to the preset action is issued, the preset action cannot be executed by the BCM 12, affecting the user experience of the vehicle.

As shown in the scenario 1 of FIG. 1b, for four positioning anchor points UWB1, UWB4, UWB2, and UWB3 deployed at both ends of a front bumper and a rear bumper of the vehicle, when the key 11 is outside the vehicle body and located on one side of a vehicle door, a transmission of a ranging signal between the key 11 and at least two of the positioning anchor points is not reflected or diffracted by a reflector, or a transmission mode of the ranging signal between the key 11 and at least two of the positioning anchor points is LOS transmission. Similarly, as shown in the scenario 2 of FIG. 1b, for four positioning anchor points UWB1, UWB4, UWB2, and UWB3 deployed at both ends of a front bumper and a rear bumper of the vehicle, when the key is outside the vehicle body and located on one side of a front portion or a rear portion of the vehicle, a transmission mode of the ranging signal between the key 11 and at least two of the positioning anchor points is LOS transmission. And in the scenarios 1 and 2 as shown in FIG. 1b, the two positioning anchor points of the LOS transmission are adjacent.

As shown in FIG. 1b, for the four positioning anchor points UWB1, UWB4, UWB2, and UWB3 deployed at both ends of the front and rear bumpers of the vehicle, if the two positioning anchor points on the same side of the front portion of the vehicle (such as UWB1 and UWB4) are not in a straight line with a vertex of an outer edge of the front portion of the vehicle (such as point K1), and if the two positioning anchor points on the same side of the door (such as UWB3 and UWB4) are not in a straight line with a vertex of an outer edge of the vehicle body on that side (such as K2), when the key 11 is located in an intersection area between the front portion of the vehicle and an outer side of the door as shown in scenario 3 as shown in FIG. 1b, a ranging signal between the key 11 and the nearest positioning anchor point is of LOS transmission. However, the ranging signal between the key 11 and the remaining three positioning anchor points (such as UWB1, UWB2, and UWB3) will be reflected or diffracted by a reflector, that is, the transmission mode of the ranging signal between the key 11 and UWB1, UWB2, UWB3 is NLOS transmission.

If a transmission mode of a ranging signal between a key and at least two positioning anchor points of a vehicle is LOS transmission, positioning calculation performed on distance information of the two positioning anchor points whose transmission mode of the ranging signal is LOS transmission can achieve accurate positioning of the key. If a transmission mode of a ranging signal between a key and one positioning anchor point of a vehicle is LOS transmission, positioning calculation performed on distance information of the positioning anchor point corresponding to LOS transmission and corrected distance information of the positioning anchor point corresponding to NLOS transmission can also achieve accurate positioning of the key.

In view of this, the present application proposes a vehicle key positioning method, which improves the accuracy of vehicle key positioning by performing positioning calculation on distance information of a positioning anchor point corresponding to LOS transmission and corrected distance information of a positioning anchor point corresponding to NLOS transmission.

The vehicle key positioning method proposed in the present application is described below with reference to some embodiments.

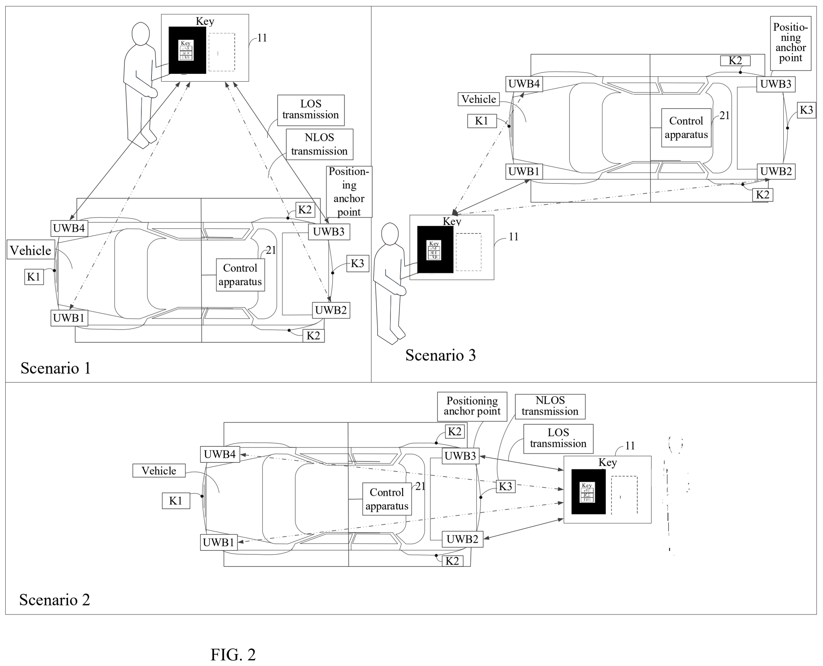

FIG. 2 is a first diagram of a vehicle key positioning scenario provided by an embodiment of the present application. As shown in FIG. 2, a plurality of positioning anchor points are provided on a vehicle, and the positioning anchor points are UWB1, UWB2, UWB3, and UWB4 as shown in FIG. 2. Exemplarily, UWB1 and UWB4 are respectively located at two ends of a front bumper of the vehicle, and UWB2 and UWB3 are respectively located at two ends of a rear bumper. For the four positioning anchor points UWB1, UWB4, UWB2, and UWB3 deployed at the two ends of the front bumper and the rear bumper of the vehicle, two positioning anchor points on the same side of a front portion of the vehicle (such as UWB1 and UWB4) are not in a straight line with a vertex of an outer edge of the front portion of the vehicle (such as point K1), two positioning anchor points on the same side of a rear portion of the vehicle (such as UWB2 and UWB3) are not in a straight line with a vertex of an outer edge of the rear portion of the vehicle (such as point K3), and two positioning anchor points on the same side of a vehicle door (such as UWB3 and UWB4) are not in a straight line with a vertex of an outer edge of the vehicle body on that side (such as K2). A positioning apparatus is deployed on a positioning anchor point, and the positioning apparatus can determine a distance between the positioning anchor point and the key 11; or, the positioning anchor point is an anchor point with a positioning function. The positioning apparatus can be a UWB apparatus including a UWB chip or a UWB module. The positioning apparatus can also be a positioning apparatus including a BLE module or a BLE chip. A control apparatus 21 is deployed on the vehicle, and the control apparatus 21 includes a BLE module. The key 11 of the vehicle also includes a UWB chip or a UWB module. The key 11 of the vehicle also includes a BLE module or a BLE chip. The key 11 of the vehicle can be a physical key or a virtual key on a user terminal. The user terminal can be a terminal such as a mobile phone or a tablet computer.

The control apparatus 21 continuously broadcasts a BLE broadcast signal through the BLE module. The key 11 of the vehicle detects the BLE broadcast signal of the vehicle in real time. If the key 11 detects and identifies that an RSSI of the BLE broadcast signal of the vehicle reaches a preset communication threshold, the key 11 sends a communication connection request to the control apparatus 21 of the vehicle. The control apparatus 21 responds to the communication connection request sent by the key 11, and establishes communication with the key 11 after successful authentication to complete a communication connection between the vehicle and the key 11. Based on a BLE ranging signal between the control apparatus 21 and the key 11, the control apparatus 21 continuously measures a distance from the key 11 to obtain a Bluetooth ranging distance of the key 11 relative to the vehicle. If the Bluetooth ranging distance is less than or equal to a first distance threshold, the control apparatus 21 controls the positioning apparatuses at a plurality of positioning anchor points of the vehicle to initiate a ranging function of each positioning apparatus. If the positioning apparatus is a UWB apparatus, the control apparatus 21 converts a Bluetooth ranging mode of the control apparatus 21 to a UWB ranging mode of the positioning apparatus. The ranging signal between the positioning apparatus and the key 11 is a ranging signal between a positioning anchor point corresponding to the positioning apparatus and the key 11.

After the control apparatus 21 converts the Bluetooth ranging mode into the UWB ranging mode, the control apparatus 21 positions the key 11 in the following manner:

the control apparatus 21 determines respective distances between a plurality of positioning anchor points of the vehicle and the key 11 based on respective ranging signals between the plurality of positioning anchor points and the key 11.

When the key 11 and the vehicle are arranged similar to the scenario as indicated in scenario 1 or scenario 2 of FIG. 2, the control apparatus 21 can determine at least two reference anchor points from the plurality of positioning anchor points based on the respective distances between the plurality of positioning anchor points and the key 11. The control apparatus 21 can perform positioning calculation on respective distances between the determined two adjacent reference anchor points and the key 11 to obtain final position information of the key 11 relative to the vehicle.

The reference anchor point indicates that a transmission mode of the ranging signal between the reference anchor point and the key 11 is line-of-sight wireless transmission (LOS).

When the key 11 and the vehicle are arranged similar to the scenario as indicated in scenario 3 in FIG. 2, a ranging signal between the key 11 and the nearest positioning anchor point (such as UWB1) is of LOS transmission. However, a ranging signal between the key 11 and the other three positioning anchor points (such as UWB2, UWB3, and UWB4) will be reflected or diffracted by a reflector, that is, a transmission mode of the ranging signal between the key 11 and UWB2, UWB3, UWB4 is NLOS transmission. The reflector can be the ground or a metal or non-metallic vehicle body. Based on the respective distances between the plurality of positioning anchor points and the key 11, the control apparatus 21 can determine one reference anchor point (such as UWB1) from the plurality of positioning anchor points. The control apparatus 21 can correct a distance between a positioning anchor point (such as UWB2 and/or UWB4) adjacent to the one reference anchor point and the key 11 to obtain a corrected distance. The control apparatus 21 performs positioning calculation on the distance between the one reference anchor point and the key 11 and the corrected distance corresponding to the positioning anchor point adjacent to the one reference anchor point to obtain final position information of the key 11 relative to the vehicle.

Based on the final position information of the key 11 relative to the vehicle and a control instruction issued by the key, the control apparatus 21 executes a preset action corresponding to both the final position information of the key 11 and the control instruction from the key 11. The preset action is such as controlling a vehicle so that the vehicle automatically leaves a garage and arrives at a predetermined position.

Exemplarily, the control apparatus 21 may determine a reference anchor point from a plurality of positioning anchor points based on respective distances between the plurality of positioning anchor points and the key 11 according to the following steps I-III.

Step I, the control apparatus 21 obtains respective received signal strength indications (RSSI) corresponding to a plurality of positioning anchor points from the key 11; and/or obtains respective state identifiers of corresponding positioning anchor points from positioning apparatuses corresponding to the plurality of positioning anchor points. The state identifier is a valid identifier indicating that a ranging signal used for ranging between the positioning anchor point and the key is valid, or an invalid identifier indicating that a ranging signal used for ranging between the positioning anchor point and the key is invalid. The valid identifier is such as 1 or *valid.* The invalid identifier is such as 0 or *invalid.* The control apparatus 21 also obtains respective time of flight (ToF) of signals corresponding to the plurality of positioning anchor points from the key 11.

Step II, the control apparatus 21 determines, from the respective distances between the plurality of positioning anchor points and the key 11, a distance between a positioning anchor point whose RSSI is greater than a signal strength threshold and the key 11 as a valid distance; and/or determines, based on the obtained respective state identifiers of the plurality of positioning anchor points, a distance between a positioning anchor point corresponding to a valid identifier and the key as a valid distance.

Step III, the control apparatus 21 determines a positioning anchor point corresponding to the valid distance as a reference anchor point; or, the control apparatus 21 determines a positioning anchor point whose ToF meets a preset condition as a reference anchor point. For example, the control apparatus 21 determines, a positioning anchor point which has the smallest ToF among ToFs corresponding to the plurality of positioning anchor points, as a reference anchor point.

The control apparatus 11 determines a valid distance from the respective distances between the plurality of positioning anchor points and the key 11, based on at least one of: a ToF satisfying a preset condition, an RSSI, and a state identifier of the positioning anchor point, and then determines a reference anchor point based on the valid distance, thereby improving the accuracy of determining the reference anchor point and ensuring the validity of the determined reference anchor point. The control apparatus 11 determines the reference anchor point based on the respective ToFs corresponding to the plurality of positioning anchor points, thereby improving the accuracy of determining the reference anchor point and ensuring the validity of the determined reference anchor point.

Optionally, the positioning apparatus may also be a Bluetooth positioning apparatus. After a ranging function of the Bluetooth positioning apparatus is activated, the control apparatus 21 positions the key 11 in the following manner: the control apparatus 21 determines respective distances between the plurality of positioning anchor points of the vehicle and the key 11 based on respective ranging signals (such as Bluetooth ranging signal) between respective Bluetooth positioning apparatuses of the plurality of positioning anchor points and the key 11. Based on the respective distances between the plurality of positioning anchor points and the key 11, if at least two reference anchor points are determined from the plurality of positioning anchor points, the control apparatus 21 performs positioning calculation on respective distances between the determined two adjacent reference anchor points and the key 11 to obtain final position information of the key 11 relative to the vehicle. Based on the respective distances between the plurality of positioning anchor points and the key 11, if one reference anchor point is determined from the plurality of positioning anchor points, the control apparatus 21 corrects a distance between a positioning anchor point adjacent to the one reference anchor point and the key 11 to obtain a corrected distance. The control apparatus 21 performs positioning calculation on the distance between the one reference anchor point and the key 11 and the corrected distance corresponding to the positioning anchor point adjacent to the one reference anchor point to obtain final position information of the key 11 relative to the vehicle.

Generally, in terms of short-range ranging, the UWB ranging accuracy is higher than the Bluetooth ranging accuracy. Therefore, the positioning apparatus may preferably be a UWB apparatus using the UWB ranging mode.

In the vehicle key positioning method provided by the embodiment of the present application, a reference anchor point of LOS transmission is determined from a plurality of positioning anchor points. If the number of the reference anchor point is at least two, positioning calculation is performed on respective distances between the two adjacent reference anchor points and the key, so as to obtain final position information of the key relative to the vehicle; if the number of the reference anchor point is one, positioning calculation is performed on the distance between the reference anchor point of LOS transmission and the key, and a corrected distance between an adjacent positioning anchor point of NLOS transmission and the key, so as to obtain final position information of the key relative to the vehicle, thereby improving the positioning accuracy of the key, so that the final position information of the key relative to the vehicle is consistent with an actual position of the key relative to the vehicle. The vehicle key positioning method provided by embodiments of the present application reduces or even eliminates the adverse effect of the inaccurate distance information determined by the ranging signal in NLOS transmission mode on the positioning accuracy of the key, and solves the problem of inaccurate positioning in the key positioning method in the prior art.

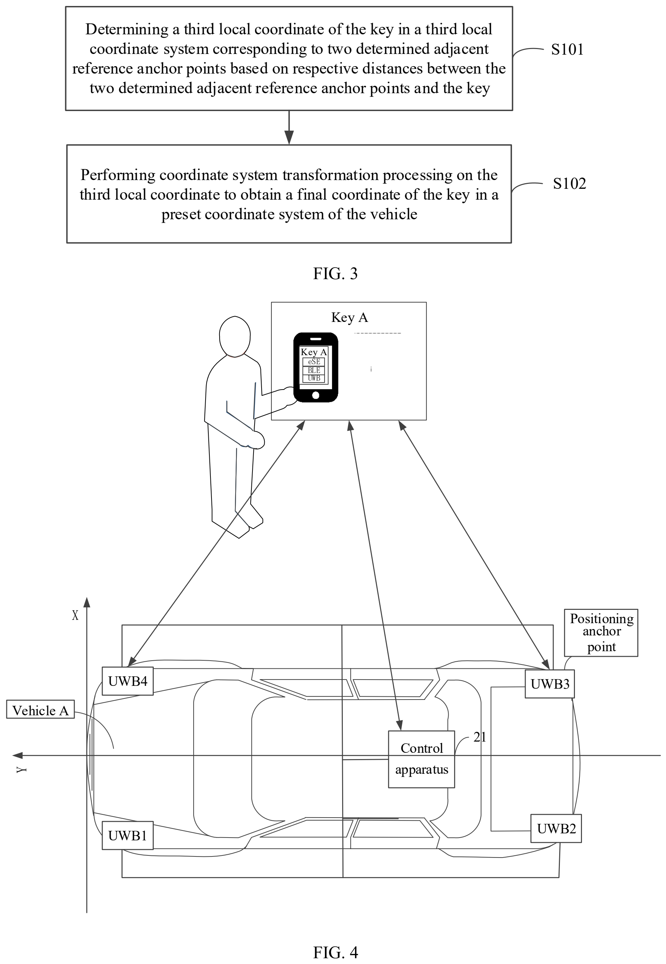

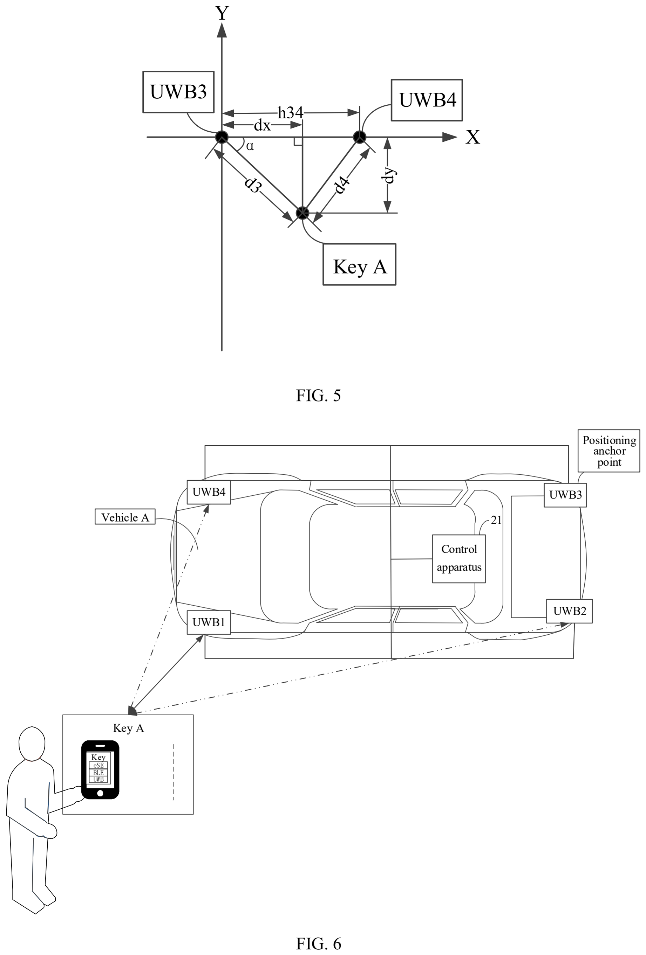

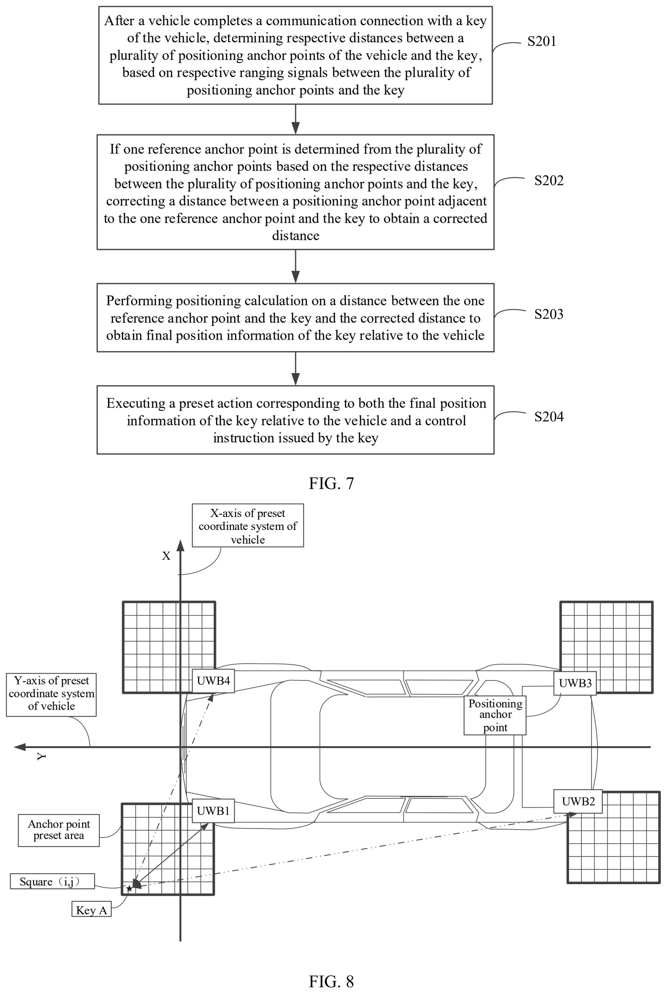

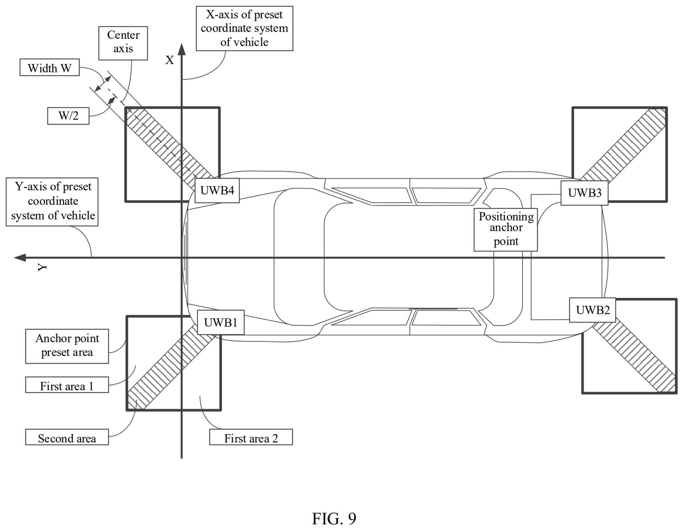

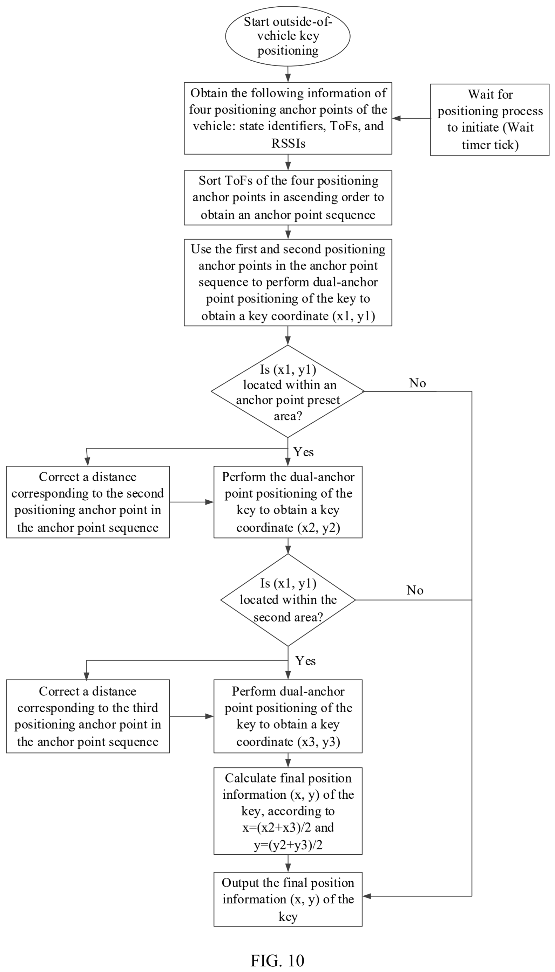

The vehicle key positioning method provided by the present application is described in detail below with reference to FIG. 3 to FIG. 10. FIG. 3 is a schematic diagram of a positioning calculation process provided by an embodiment of the present application. FIG. 4 is a second schematic diagram of a vehicle key positioning scenario provided by an embodiment of the present application. FIG. 5 is a schematic diagram of a local coordinate system provided by an embodiment of the present application. FIG. 6 is a third schematic diagram of a vehicle key positioning scenario provided by an embodiment of the present application. FIG. 7 is a first flowchart of a vehicle key positioning process provided by an embodiment of the present application. FIG. 8 is a schematic diagram of determining a preset correction value provided by an embodiment of the present application. FIG. 9 is a schematic diagram of the relationship between a first area, a second area and an anchor point preset area provided by an embodiment of the present application. FIG. 10 is a second flowchart of a vehicle key positioning process provided by an embodiment of the present application. The execution entity of the vehicle key positioning method provided by an embodiment of the present application may be the control apparatus 21 in the embodiment shown in FIG. 2. The following is an exemplary description taking the execution entity being the control apparatus 21 as an example.

After a communication connection between the vehicle and the key 11 of the vehicle is completed and positioning apparatuses on a plurality of positioning anchor points on the vehicle start ranging operation, the control apparatus 21 obtains respective ranging signals between the plurality of positioning anchor points of the vehicle and the key 11. The control apparatus 21 determines respective distances between the plurality of positioning anchor points of the vehicle and the key 11 based on the respective ranging signals between the plurality of positioning anchor points and the key 11. If the key 11 and the vehicle are arranged similar to the scenario 1 or scenario 2 in FIG. 2, or the scenario shown in FIG. 4, the control apparatus 21 can determine at least two reference anchor points from the plurality of positioning anchor points, based on the respective distances between the plurality of positioning anchor points and the key 11, so as to position the key 11. If the key 11 and the vehicle are arranged similar to the scenario 3 in FIG. 2, or the scenario shown in FIG. 6, the control apparatus 21 can determine one reference anchor point from the plurality of positioning anchor points, based on the respective distances between the plurality of positioning anchor points and the key 11, so as to position the key 11.

The following describes a method for positioning the key 11 when the number of the determined reference anchor points is at least two and a method for positioning the key 11 when the number of the determined reference anchor points is one.

(I) When the number of the determined reference anchor points is at least two, the method for positioning the key 11 is described as follows:

if the control apparatus 21 determines at least two reference anchor points from a plurality of positioning anchor points based on respective distances between the plurality of positioning anchor points and the key 11, then positioning calculation is performed on respective distances between the determined two adjacent reference anchor points and the key 11 in the manner shown in S101-S102 in FIG. 3, so as to obtain final position information of the key 11 relative to the vehicle.

S101, determining, by the control apparatus 21, a third local coordinate of the key 11 in a third local coordinate system corresponding to the two determined adjacent reference anchor points based on the respective distances between the two determined adjacent reference anchor points and the key 11.

Exemplarily, the control apparatus 21 determines the third local coordinate system with a line connecting the two determined adjacent reference anchor points as an X-axis and a reference anchor point on the X-axis as the coordinate origin. Optionally, if the key 11 is not collinear with the reference anchor points, on the same vehicle, the local coordinate system determined by the control apparatus 21 may be a local coordinate system in which a Y-axis coordinate value of the key 11 is a negative number. Optionally, if the key 11 is not collinear with the reference anchor points, on the same vehicle, the local coordinate system determined by the control apparatus 21 may also be a local coordinate system in which a Y-axis coordinate value of the key 11 is a positive number. The control apparatus 21 determines the third local coordinate of the key 11 in the third local coordinate system corresponding to the two determined adjacent reference anchor points based on respective distances between the two determined adjacent reference anchor points and the key 11. The third local coordinate of the key 11 represents a position of the key 11 relative to the two determined adjacent reference anchor points.

The control apparatus 21 accurately determines the position of the key 11 relative to the two adjacent reference anchor points, based on the respective distances between the two adjacent reference anchor points where the transmission mode of the ranging signal is LOS and the key 11, thereby ensuring the accuracy of the determined position of the key 11 and facilitating a subsequent coordinate system transformation processing on the local coordinate of the key 11 in the manner shown in S102 to obtain a coordinate of the key 11 in a preset coordinate system of the vehicle.

S102, performing, by the control apparatus 21, coordinate system transformation processing on the third local coordinate to obtain a final coordinate of the key 11 in a preset coordinate system of the vehicle; where the final position information of the key 11 relative to the vehicle includes the final coordinate of the key 11 in the preset coordinate system of the vehicle.

Exemplarily, the control apparatus 21 determines a coordinate transformation coefficient θ corresponding to the coordinate origin of the local coordinate system to which the third local coordinate ($x_{l3}$, $y_{l3}$) belongs.

The control apparatus 21 uses a transformation matrix $\begin{bmatrix} x_{r3} \\ y_{r3} \end{bmatrix} = \begin{bmatrix} \cos\theta & -\sin\theta \\ \sin\theta & \cos\theta \end{bmatrix} \begin{bmatrix} x_{l3} \\ y_{l3} \end{bmatrix}$ to transform the third local coordinate ($x_{l3}$, $y_{l3}$) into a rotation coordinate ($x_{r3}$, $y_{r3}$). The control apparatus 21 uses formulas $x_{g3} = x_{r3} + x_{03}$ and $y_{g3} = y_{r3} + y_{03}$ to determine a final coordinate ($x_{g3}$, $y_{g3}$) of the key 11 in a preset coordinate system of the vehicle, based on a global coordinate ($x_{03}$, $y_{03}$) of the positioning anchor point, which corresponds to the coordinate origin of the third local coordinate system, in the preset coordinate system of the vehicle.

Step S102 realizes the conversion between a coordinate of the key 11 in a local coordinate system and a coordinate of the key 11 in a preset coordinate system, thereby obtaining final position information of the key 11 relative to the vehicle.

After the control apparatus 21 obtains the final position information of the key 11 relative to the vehicle according to steps S101- S102, the control apparatus 21 executes a preset action corresponding to both the final position information of the key 11 relative to the vehicle and a control instruction issued by the key 11.

Positioning calculation shown in steps S101-S102 is described below with an example.

Assuming that *key A* and vehicle *A* are arranged as shown in FIG. 4, a preset coordinate system of vehicle *A* can be a coordinate system shown in FIG. 4, that is, a forward direction of a centerline of the vehicle body is a positive direction of a Y axis, a right direction of a driver is a positive direction of an X axis, and an intersection of the X axis and the Y axis is located at a vertex of a front edge of the vehicle along a central axis (e.g., point K1 as shown in FIG. 2). Four positioning anchor points UWB1, UWB2, UWB3, and UWB4 of vehicle *A* are deployed in the same manner as the four positioning anchor points UWB1, UWB2, UWB3, and UWB4 shown in FIG. 2. When the four positioning anchor points UWB1, UWB2, UWB3, and UWB4 of vehicle *A* are respectively used as coordinate origins of local coordinate systems, corresponding coordinate transformation coefficients thereof are $\theta_1$, $\theta_2$, $\theta_3$, and $\theta_4$, respectively, where the values of $\theta_1$, $\theta_2$, $\theta_3$, and $\theta_4$ can be 270°, 0°, 90°, and 180° respectively.

The control apparatus 21 determines two adjacent reference anchor points UWB3 and UWB4 according to respective distances between the four positioning anchor points UWB1, UWB2, UWB3, and UWB4 of vehicle *A* shown in FIG. 4 and key *A*. Coordinates of the two adjacent reference anchor points UWB3 and UWB4 in a preset coordinate system of vehicle *A* are ($x_{03A}$, $y_{03A}$) and ($x_{04A}$, $y_{04A}$) respectively.

The control apparatus 21 determines the third local coordinate system shown in FIG. 5 with a line connecting the reference anchor points UWB3 and UWB4 as an X-axis and UWB3 as a coordinate origin. A coordinate transformation coefficient corresponding to the coordinate origin of the third local coordinate system shown in FIG. 5 is $\theta_3$. The third local coordinate system is the local coordinate system corresponding to the reference anchor points UWB3 and UWB4. In the third local coordinate system, a Y-axis coordinate value of key *A* is a negative number. Based on respective distances *d3* and *d4* between the reference anchor points UWB3 and UWB4 and key *A*, and a distance $h_{34}$ between the reference anchor points UWB3 and UWB4, the control apparatus 21 determines the third local coordinate ($x_{l3A}$, $y_{l3A}$) of the key 11 in the third local coordinate system shown in FIG. 5 as follows.

As shown in FIG. 5, a vertical distance from key *A* to the X-axis is *dy,* and a vertical distance from key *A* to the Y-axis is *dx*. Then the third local coordinate ($x_{l3A}$, $y_{l3A}$) of key *A* in the third local coordinate system shown in FIG. 5 is (*dx*, *-dy*).

*dx* and *dy* are determined as follows: the control apparatus 21 determines $\cos\alpha = \frac{(d_3)^2 + (h_{34})^2 - (d_4)^2}{2 \times d_3 \times h_{34}}$ according to the cosine theorem $(d_4)^2 = (d_3)^2 + (h_{34})^2 - 2 \times d_3 \times h_{34} \times \cos\alpha$, and further determines: $d_x = d_3 \times \cos\alpha$; $d_y = d_3 \times \sin\alpha$.

The control apparatus 21 uses a transformation matrix $\begin{bmatrix} x_{r3A} \\ y_{r3A} \end{bmatrix} = \begin{bmatrix} \cos\theta_3 & -\sin\theta_3 \\ \sin\theta_3 & \cos\theta_3 \end{bmatrix} \begin{bmatrix} x_{l3A} \\ y_{l3A} \end{bmatrix}$ to transform the third local coordinate ($x_{l3A}$, $y_{l3A}$) into a rotation coordinate ($x_{r3A}$, $y_{r3A}$). The control apparatus 21 determines a final coordinate ($x_{g3A}$, $y_{g3A}$) of key *A* in a preset coordinate system of vehicle *A,* based on a global coordinate ($x_{03A}$, $y_{03A}$) of the positioning anchor point, which corresponds to the coordinate origin of the third local coordinate system, in the preset coordinate system of vehicle *A,* using formulas $x_{g3A} = x_{r3A} + x_{03A}$ and $y_{g3A} = y_{r3A} + y_{03A}$. The final coordinate ($x_{g3A}$, $y_{g3A}$) of key *A* in the preset coordinate system of vehicle *A* is final position information of key *A* relative to vehicle *A*.

(II) The method for positioning the key 11 when the number of the determined reference anchor points is one is described as follows.

If the key 11 and the vehicle are arranged as shown in scenario 3 in FIG. 2, a transmission mode of a ranging signal between the key 11 and UWB1 is LOS. However, a transmission mode of ranging signals between the key 11 and UWB2, UWB3, UWB4 is NLOS. The control apparatus 21 determines UWB1 as a reference anchor point based on respective distances between the four positioning anchor points UWB1, UWB2, UWB3, UWB4 and the key 11.

The method for positioning the key 11 shown in the scenario 3 of FIG. 2 is as shown in FIG. 7.

S201, after a vehicle completes a communication connection with a key 11 of the vehicle, determining, by the control apparatus 21, respective distances between a plurality of positioning anchor points of the vehicle and the key 11 based on respective ranging signals between the plurality of positioning anchor points and the key 11.

S202, if one reference anchor point is determined from the plurality of positioning anchor points, by the control apparatus 21, based on the respective distances between the plurality of positioning anchor points and the key 11, correcting a distance between a positioning anchor point adjacent to the one reference anchor point and the key 11 to obtain a corrected distance.

If the control apparatus 21 determines one reference anchor point from the plurality of positioning anchor points based on the respective distances between the plurality of positioning anchor points and the key 11, then it means that a transmission mode of a ranging signal between a positioning anchor point adjacent to the one reference anchor point and the key 11 is NLOS. When a transmission mode of a ranging signal between a positioning anchor point and the key 11 is NLOS, it indicates that the ranging signal between the positioning anchor point and the key 11 is reflected or diffracted by a reflector during a transmission process, and a distance between the positioning anchor point and the key 11 determined based on the ranging signal reflected or diffracted by the reflector is greater than an actual distance between the positioning anchor point and the key 11. If the distance determined by the ranging signal in NLOS transmission mode between the positioning anchor point and the key 11 is to be used for the positioning of the key 11, it is necessary to correct the distance determined by the ranging signal in NLOS transmission mode to obtain an accurate distance between the positioning anchor point and the key 11, so as to improve the positioning accuracy of the key 11. In this regard, an embodiment of the present application proposes to use a preset correction value to correct the distance determined by the ranging signal in NLOS transmission mode.

Exemplarily, FIG. 8 is a schematic diagram of determining a preset correction value provided by an embodiment of the present application. As shown in FIG. 8, each of the four positioning anchor points of the vehicle (such as UWB1, UWB2, UWB3, UWB4) are preset to correspond to an anchor point preset area (such as a 5 m × 5 m area), and equidistant squares (such as 25 cm × 25 cm squares) are set in the anchor point preset area. The identification of each square can be represented by (i,j), where i represents a grid number in an X-axis direction in a preset coordinate system of the vehicle, and $j$ represents a grid number in a Y-axis direction in the preset coordinate system of the vehicle. The coordinate point $(X_i, Y_j)$ in the square $(i, j)$ satisfies $\beta_{i1} \le X_i \le \beta_{i2}$, and $\beta_{j1} \le Y_j \le \beta_{j2}$. For each square of each anchor point preset area, the key 11 is placed at a center position of the square, and respective distances between positioning anchor points adjacent to a positioning anchor point corresponding to the anchor point preset area and the key, determined by ranging signals in NLOS transmission mode, i.e., acquisition distances, are obtained;

distances between a center position of a square and the positioning anchor points adjacent to the positioning anchor point corresponding to the anchor point preset area, i.e., theoretical distances, are calculated; and a difference between the acquisition distance and the theoretical distance is determined as a compensation value corresponding to the square. Optionally, the shape of the anchor point preset area can also be a sector, a circle, or other irregular shapes.

As shown in FIG. 8, the adjacent positioning anchor points of UWB1 include UWB2 and UWB4. The key 11 (such as key $A$ in FIG. 8) is placed at a center position of the square $(i, j)$ in an anchor point preset area corresponding to UWB1. An acquisition distance $d21$ between key $A$ and UWB2 is obtained, and a theoretical distance $d22$ between key $A$ and UWB2 is calculated, so that a compensation value $\Delta d2$ $(i, j)$ of the adjacent positioning anchor point UWB2 corresponding to the square (i,j), which is equal to $d21 - d22$, is determined. Similarly, an acquisition distance $d41$ between key $A$ and UWB4 is obtained, and a theoretical distance $d42$ between key $A$ and UWB4 is calculated, so that a compensation value $\Delta d4$ $(i, j)$ of the adjacent positioning anchor point UWB4 corresponding to the square $(i,j)$, which is equal to $d41-d42$, is determined.

The compensation value corresponding to the square $(i,j)$ is also a preset correction value corresponding to the square (i,j). After the preset correction value is determined, the control apparatus 21 can use the preset correction value to correct a distance determined by the ranging signal in NLOS transmission mode to obtain an accurate distance.

Exemplarily, one positioning anchor point adjacent to the one reference anchor point is a first adjacent anchor point. If the control apparatus 21 determines the one reference anchor point from the plurality of positioning anchor points based on the respective distances between the plurality of positioning anchor points and the key 11, the control apparatus 21 uses a method similar to S101-S102 to perform positioning calculation on a distance between the one reference anchor point and the key 11 and a distance between the first adjacent anchor point and the key 11, as well as a distance between the one reference anchor point and the first adjacent anchor point, to obtain first position information of the key 11 relative to the vehicle. The control apparatus 21 determines an identifier $(i, j)$ of the square corresponding to the first position information based on conditions $\beta_{i1} \le X_i \le \beta_{i2}$ and $\beta_{j1} \le Y_j \le \beta_{j2}$ of a coordinate point $(X_i, Y_j)$ in the square $(i, j)$. The control apparatus 21 determines a compensation value of the first adjacent anchor point corresponding to the square $(i,j)$ according to the identifier $(i,j)$ of the square. The compensation value of the first adjacent anchor point corresponding to the square (i,j) is a preset correction value corresponding to the first position information. The control apparatus 21 uses the preset correction value corresponding to the first position information to perform a correction calculation on the distance between the first adjacent anchor point and the key to obtain a corrected distance of the first adjacent anchor point. For example, the control apparatus 21 subtracts the compensation value of the first adjacent anchor point corresponding to the square *(i,j)* from the distance between the first adjacent anchor point and the key to obtain the corrected distance of the first adjacent anchor point.

The control apparatus 21 adopts a method similar to S101-S102 to perform positioning calculation on a distance between the one reference anchor point and the key 11 and a distance between the first adjacent anchor point and the key 11, and a distance between the one reference anchor point and the first adjacent anchor point, so as to obtain first position information of the key 11 relative to the vehicle. For example, the control apparatus 21 takes a line connecting the one reference anchor point and the first adjacent anchor point as an X-axis, and takes the one reference anchor point or the first adjacent anchor point as a coordinate origin, to determine a first local coordinate system corresponding to the one reference anchor point and the first adjacent anchor point. Based on the distance between the one reference anchor point and the key, the distance between the first adjacent anchor point and the key, and the distance between the one reference anchor point and the first adjacent anchor point, the control apparatus 21 determines a first local coordinate of the key 11 in the first local coordinate system according to the cosine theorem similar to the embodiment of FIG. 5. The control apparatus 21 adopts a similar method as shown in step S102 to perform coordinate system transformation processing on the first local coordinate, to obtain a first coordinate of the key 11 in a preset coordinate system of the vehicle, and the first coordinate is the first position information of the key 11 relative to the vehicle.

After a corrected distance of the first adjacent anchor point is determined in step S202, step S203 may be executed based on the corrected distance of the first adjacent anchor point to determine final position information of the key 11 relative to the vehicle.

S203, performing, by the control apparatus 21, positioning calculation on a distance between the one reference anchor point and the key 11 and the corrected distance of the first adjacent anchor point to obtain final position information of the key 11 relative to the vehicle.

Exemplarily, the control apparatus 21 adopts a method similar to S101-S102 to perform positioning calculation on a distance between the one reference anchor point and the key 11, the corrected distance of the first adjacent anchor point, and the distance between the one reference anchor point and the first adjacent anchor point to obtain the final position information of the key 11 relative to the vehicle.

FIG. 9 is a schematic diagram of the relationship between a first area, a second area and an anchor point preset area provided by an embodiment of the present application. As shown in FIG. 9, each anchor point preset area includes two first areas (such as first area 1 and first area 2) and one second area.

The first area indicates that the accuracy of a final position of the key 11 is related to one adjacent positioning anchor point of the one reference anchor point corresponding to the anchor point preset area.

The second area represents that the accuracy of a final position of the key 11 is related to two adjacent positioning anchor points of the one reference anchor point corresponding to the anchor point preset area. As shown in FIG. 9, the second area corresponding to UWB1 corresponds to the one reference anchor point UWB1, and adjacent positioning anchor points of the one reference anchor point UWB1 are UWB2 and UWB4, respectively. For the same second area, such as the second area corresponding to UWB1 in FIG. 9, if the key 11 is located in the second area, position information obtained by positioning calculation for the key 11 based on UWB1 and UWB2, and position information obtained by positioning calculation for the key 11 based on UWB1 and UWB4 are respectively located on both sides of a central axis of the second area. Therefore, when the key 11 is located in the second area, performing positioning calculation for the key 11, based on the one reference anchor point and one adjacent positioning anchor point of the one reference anchor point, leads to a phenomenon of the position information obtained switching back and forth between both sides of the central axis of the second area. Therefore, the second area represents that the accuracy of the final position of the key 11 is related to two adjacent positioning anchor points of the one reference anchor point corresponding to the anchor point preset area.

Optionally, an angle between the central axis of the second area and a Y axis (or X axis) of the preset coordinate system of the vehicle may be 45°.

Optionally, a width of the second area can be determined based on a theoretical calculation and a measurement result of the key in an anchor point preset area. For example, the width of the second area $W = 10\sigma$, where $\sigma$ is a variance of a ranging error of a positioning apparatus at a positioning anchor point. If the positioning apparatus is a UWB apparatus, the corresponding $\sigma$ is 6-10 (cm), and a probability within $3\sigma$ is 0.9974 when a ranging is normally distributed.

If the first position information determined in step S202 is located in the preset first area, the control apparatus 21 adopts a method similar to S101-S102 to perform positioning calculation on the distance between the one reference anchor point and the key 11, the corrected distance of the first adjacent anchor point, and the distance between the one reference anchor point and the first adjacent anchor point to obtain a first positioning result of the key 11, and determines the first positioning result as the final position information of the key 11 relative to the vehicle.

Exemplarily, if first position information is located in the preset first area, the control apparatus 21 determines the first local coordinate system with a line connecting the one reference anchor point and the first adjacent anchor point as an X-axis and the one reference anchor point or the first adjacent anchor point as a coordinate origin. Based on the distance between the one reference anchor point and the key, the corrected distance of the first adjacent anchor point, and the distance between the one reference anchor point and the first adjacent anchor point, the control apparatus 21 determines a first corrected local coordinate of the key 11 in the first local coordinate system using a cosine theorem calculation method similar to the embodiment of FIG. 5. The control apparatus 21 uses a similar method as shown in step S102 to perform coordinate system transformation processing on the first corrected local coordinate to obtain the first corrected coordinate of the key 11 in the preset coordinate system of the vehicle. The control apparatus 21 determines the first corrected coordinate as the final position information of the key 11 relative to the vehicle, thereby increasing the positioning rate of the key 11.

Another positioning anchor point adjacent to the one reference anchor point is a second adjacent anchor point.

If the first position information determined in step S202 is located in a preset second area, the control apparatus 21 uses a method similar to S101-S102 to perform positioning calculation on the distance between the one reference anchor point and the key, a distance between the second adjacent anchor point and the key, and a distance between the one reference anchor point and the second adjacent anchor point, to obtain second position information of the key 11 relative to the vehicle. The control apparatus 21 uses a preset correction value corresponding to the second position information to perform a correction calculation on the distance between the second adjacent anchor point and the key, to obtain a corrected distance of the second adjacent anchor point. The control apparatus 21 uses a method similar to S101-S102 to perform positioning calculation on the distance between the one reference anchor point and the key 11, the corrected distance of the second adjacent anchor point, and the distance between the one reference anchor point and the second adjacent anchor point, to obtain a second positioning result of the key 11. The control apparatus 21 determines an average value of the first positioning result and the second positioning result as final position information of the key 11 relative to the vehicle, so as to improve the positioning accuracy of the key 11 in the second area.

The control apparatus 21 adopts a method similar to S101-S102 to perform positioning calculation on the distance between the one reference anchor point and the key 11, the corrected distance of the second adjacent anchor point, and the distance between the one reference anchor point and the second adjacent anchor point, to obtain the second positioning result of the key 11. For example: the control apparatus 21 determines a second local coordinate system with a line connecting the one reference anchor point and the second adjacent anchor point as an X-axis and the one reference anchor point or the second adjacent anchor point as a coordinate origin. The control apparatus 21 determines a second corrected local coordinate of the key 11 in the second local coordinate system based on the distance between the one reference anchor point and the key 11, the corrected distance of the second adjacent anchor point, and the distance between the one reference anchor point and the second adjacent anchor point, using a cosine theorem calculation method similar to the embodiment of FIG. 5. The control apparatus 21 adopts a method similar to that shown in step S102 to perform coordinate system transformation processing on the second corrected local coordinate to obtain a second corrected coordinate of the key 11 in the preset coordinate system of the vehicle.

Exemplarily, the first positioning result includes the first corrected coordinate of the key 11 in the preset coordinate system of the vehicle. The second positioning result includes the second corrected coordinate of the key 11 in the preset coordinate system of the vehicle. If the first position information is located in the preset second area, the control apparatus 21 calculates a mean value of the coordinate values of the first corrected coordinate and the second corrected coordinate to obtain a final coordinate of the key 11 in the preset coordinate system of the vehicle. The final coordinate of the key 11 in the preset coordinate system of the vehicle is the final position information of the key 11 relative to the vehicle.

In the same anchor point preset area, if a first area and an adjacent positioning anchor point are located on the same side of the second area, it indicates that the first area corresponds to the adjacent positioning anchor point. The adjacent positioning anchor point is an adjacent positioning anchor point of the positioning anchor point corresponding to the anchor point preset area.

Optionally, if the control apparatus 21 determines one reference anchor point from the plurality of positioning anchor points, based on the respective distances between the plurality of positioning anchor points and the key 11, the control apparatus 21 may obtain the first position information corresponding to the first adjacent anchor point of the one reference anchor point and the second position information corresponding to the second adjacent anchor point of the one reference anchor point. If the control apparatus 21 determines that the first position information and the second position information are both located in the same first area, the control apparatus 21 positions the key 11 based on an adjacent positioning anchor point corresponding to said first area and the one reference anchor point. The control apparatus 21 positions the key 11 based on the adjacent positioning anchor point corresponding to said first area and the one reference anchor point. For example, the control apparatus 21 uses a method similar to S101-S102 to perform positioning calculation on a corrected distance of the adjacent positioning anchor point corresponding to said first area, the distance between the one reference anchor point and the key 11, and a distance between the one reference anchor point and the adjacent positioning anchor point corresponding to said first area, to obtain final position information of the key 11 relative to the vehicle.

After the control apparatus 21 obtains the final position information of the key 11 relative to the vehicle according to step S203, the control apparatus 21 executes step S204.

S204, executing, by the control apparatus 21, a preset action corresponding to both the final position information of the key 11 relative to the vehicle and a control instruction issued by the key 11.

Taking FIG. 6 as an example, the positioning of the vehicle key shown in FIG. 6 is exemplarily described in the manner shown in steps (1)-(4).

(1) as shown in FIG. 6, after the control apparatus 21 of vehicle A completes a communication connection with key A of vehicle A, based on respective ranging signals between four positioning anchor points UWB1, UWB2, UWB3, UWB4 of vehicle A and key A, determining respective distances between UWB 1, UWB2, UWB3, UWB4 and key A, represented as d1a, d2a, d3a, and d4a, respectively, where a transmission mode of the ranging signal between key A and UWB1 is LOS, indicating that an actual distance between key A and UWB1 is the same as or equal to d1a, and a transmission mode of the ranging signal between key A and each of UWB2, UWB3, and UWB4 is NLOS, indicating that an actual distance between key A and UWB2 is less than d2a, an actual distance between key A and UWB3 is less than d3a, and an actual distance between key A and UWB4 is less than d4a;

in an embodiment of the present application, an actual distance between two points refers to a straight-line distance between the two points. For example, an actual distance between key A and UWB4 is a straight-line distance between key A and UWB4.

(2) determining, by the control apparatus 21, one reference anchor point UWB1, based on the respective distances between the four positioning anchor points UWB1, UWB2, UWB3, UWB4 and key A, where the positioning anchor points adjacent to UWB1 include UWB2 and UWB4; if UWB2 is the first adjacent anchor point, UWB4 is the second adjacent anchor point;

(3) using, by the control apparatus 21, a method similar to that shown in steps S101-S102 to perform positioning calculation on a distance between UWB1 and key A, a distance between UWB2 and key A, and a distance between UWB1 and UWB2, so as to obtain first position information of key A; and using, by the control apparatus 21, a method similar to that shown in steps S101-S102 to perform positioning calculation on a distance between UWB1 and key A, a distance between UWB4 and key A, and a distance between UWB1 and UWB4, so as to obtain second position information of key A;

(4) if the first position information and the second location information are both located in the same first area, executing steps (4.1.1) to (4.1.4); if the first position information and the second location information are both located in the same second area, executing steps (4.2.1) to (4.2.5);

(4.1.1) if the first position information and the second position information are both located in the same first area, the same first area is first area 1 in the anchor point preset area corresponding to UWB1 as shown in FIG. 8, and first area 1 corresponds to UWB4, determining, by the control apparatus 21, an identifier $(i_1, j_1)$ of a square corresponding to the second position information, according to the second position information.

(4.1.2) correcting, by the control apparatus 21, a distance d4a between UWB4 and key A, using a compensation value $\Delta d4$ $(i_1, j_1)$ of the positioning anchor point UWB4 corresponding to the square $(i_1, j_1)$, according to the formula: $d4ax = d4a - \Delta d4$ $(i_1, j_1)$, so as to obtain a corrected distance d4ax corresponding to UWB4;

(4.1.3) performing, by the control apparatus 21, positioning calculation on d1a, d4ax, and a distance between UWB1 and UWB4, using a method similar to that shown in steps S101-S102, so as to obtain a second corrected coordinate $(x_{gA2}, y_{gA2})$; and determining, by the control apparatus 21, $(x_{ga2}, y_{ga2})$ as a final coordinate of key A relative to vehicle A.

(4.1.4) executing, by the control apparatus 21, a preset action corresponding to both final position information of key A relative to vehicle A (such as $(x_{gA2}, y_{gA2})$) and a control instruction issued by key A;

(4.2.1) if the first position information and the second position information are both located in the same second area, and the same second area is the second area in an anchor point preset area corresponding to the UWB1 as shown in FIG. 8, determining, by the control apparatus 21, an identifier $(i_1, j_1)$ of a square corresponding to the second position information according to the second position information and an identifier $(i_2, j_2)$ of a square corresponding to the first position information according to the first position information;

(4.2.2) correcting, by the control apparatus 21, a distance d4a between UWB4 and key A, using a compensation value $\Delta d4$ $(i_1, j_1)$ of the positioning anchor point UWB4 corresponding to the square $(i_1, j_1)$, according to the formula: $d4ax = d4a - \Delta d4$ $(i_1, j_1)$, so as to obtain a corrected distance d4ax corresponding to UWB4; and correcting, by the control apparatus 21, a distance d2a between UWB2 and key A, using a compensation value $\Delta d2$ $(i_2, j_2)$ of

the positioning anchor point UWB2 corresponding to the square $(i_2,j_2)$, according to the formula: $d2ax=d4a-\Delta d2\ (i_2,j_2\ )$ , so as to obtain a corrected distance $d2ax$ corresponding to UWB2;

(4.2.3) performing, by the control apparatus 21, positioning calculation on $d1a, d4ax,$ and a distance between UWB1 and UWB4, using a method similar to that shown in steps S101-S102, so as to obtain a second corrected coordinate $(x_{gA2}, y_{gA2})$; and performing, by the control apparatus 21, positioning calculation on $d1a, d2ax,$ and a distance between UWB1 and UWB2, using a method similar to that shown in steps S101-S102, so as to obtain a first corrected coordinate $(x_{gA1}, y_{gA1})$;

(4.2.4) calculating, by the control apparatus 21, a mean of the second corrected coordinate $(x_{gA2}, y_{gA2})$ and the first corrected coordinate $(x_{gA1}, y_{gA1})$, according to $x_{gA} = \frac{x_{gA1}+x_{gA2}}{2}$ and

$y_{gA} = \frac{y_{gA1}+y_{gA2}}{2}$ , so as to obtain a final coordinate $(x_{gA}, y_{gA})$ of key $A$ in the preset coordinate system of vehicle $A$;

(4.2.5) executing, by the control apparatus 21, a preset action corresponding to both final position information of key $A$ relative to vehicle $A$ (such as $(x_{gA}, y_{gA})$) and a control instruction issued by key $A$.

The positioning of key $A$ shown in FIG. 6 is exemplarily described below with reference to the positioning process shown in FIG. 10.

(a) after key $A$ establishes a communication connection with vehicle $A$, initiating an outside-of-vehicle positioning of key $A$, and waiting for a control apparatus 21 of vehicle $A$ to initiate a positioning process;

(b) after the control apparatus 21 initiates the positioning process, obtaining, by the control apparatus 21 of vehicle $A$, the following information of four positioning anchor points of vehicle $A$: state identifiers (such as valid identification), ToFs and RSSIs.

(c) sorting, by the control apparatus 21, ToFs of the four positioning anchor points in ascending order to obtain an anchor point sequence.

(d) using, by the control apparatus 21, the first and second positioning anchor points in the anchor point sequence to perform dual-anchor point positioning of key $A$, using a positioning calculation method similar to steps S101-S102 to obtain a coordinate $(x1, y1)$ of key $A$ in a preset coordinate system of vehicle $A$.

(e) determining, by the control apparatus 21, whether the coordinate $(x1, y1)$ is located in an anchor point preset area, if not, performing step (e1) by the control apparatus 21;

(e1) outputting the coordinate $(x1, y1)$ as final position information $(x, y)$ of key $A$;

if yes, performing the following steps (e2)-(e4) by the control apparatus 21;

(e2) correcting, the control apparatus 21, a distance between the second positioning anchor point in the anchor point sequence and key $A$ to obtain a corrected distance.

(e3) performing, the control apparatus 21, dual-anchor point positioning of key $A$, based on a distance between the first positioning anchor point and key $A$ and the corrected distance corresponding to the second positioning anchor point, using a positioning calculation method similar to steps S101-S102, so as to obtain a coordinate $(x2, y2)$ of key $A$ in the preset coordinate system of vehicle $A$;

(e4) determining, by the control apparatus 21, whether the coordinate $(x1, y1)$ is located in the second area; if not, performing, by the control apparatus 21, step (e41);

(e41) outputting, by the control apparatus 21, the coordinate $(x2, y2)$ as final position information $(x, y)$ of key $A$;

if yes, executing, by the control apparatus 21, steps (e42)-(e45);

(e42) correcting, by the control apparatus 21, a distance between a third positioning anchor point in the anchor point sequence and key $A$ to obtain a corrected distance;

(e43) based on the distance between the first positioning anchor point and key $A$ and the corrected distance corresponding to the third positioning anchor point, performing, by the control apparatus 21, dual-anchor point positioning of key $A$, using a positioning calculation method similar to steps S101-S102, so as to obtain a coordinate $(x3, y3)$ of key $A$ in the preset coordinate system of vehicle $A$;

(e44) calculating, by the control apparatus 21, final position information $(x, y)$ of key $A$ relative to vehicle $A$, according to x=(x2+x3)/2 and y=(y2+y3)/2.

(e45) outputting, by the control apparatus 21, the final position information $(x, y)$ of *key A*.

In the vehicle key positioning method provided in the present embodiment, a reference anchor point of LOS transmission is determined from a plurality of positioning anchor points. If the number of the reference anchor point is one, positioning calculation on a distance between the one reference anchor point of LOS transmission and the key and a corrected distance between an adjacent positioning anchor point of NLOS transmission and the key is performed to obtain the accurate final position information of the key relative to the vehicle, thereby improving the positioning accuracy of the key. In addition, if the key is located in a first area of an anchor point preset area, the reference anchor point and one positioning anchor point adjacent to the reference anchor point are used for positioning, thereby improving the key positioning speed. If the key is located in a second area of the anchor point preset area, corrected coordinates corresponding to two positioning anchor points adjacent to the reference anchor point are averaged to obtain the accurate final position information of the key relative to the vehicle, thereby improving the positioning accuracy of the key in the second area. The vehicle key positioning method provided by the embodiments of the present application reduces or even eliminates the adverse effect of the inaccurate distance information determined by the ranging signal of NLOS transmission on the positioning accuracy of the key, thereby improving the positioning accuracy of the key and solving the problem of inaccurate positioning in the key positioning method in the prior art. The vehicle key positioning method provided by the embodiment of the present application only needs to deploy four positioning anchor points to achieve accurate positioning of the key at different positions related to the vehicle, saving positioning apparatus resources at the positioning anchor points.

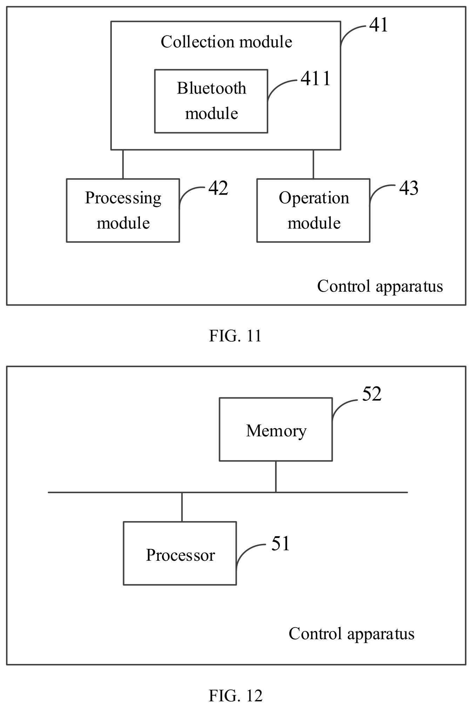

An embodiment of the present application also provides a control apparatus, and FIG. 11 is a first structural diagram of a control apparatus provided by an embodiment of the present application. As shown in FIG. 11, the control apparatus includes: a collection module 41, a processing module 42 and an operation module 43.

The collection module 41 is configured to after a vehicle completes a communication connection with a key of the vehicle, determine respective distances between a plurality of positioning anchor points of the vehicle and the key, based on respective ranging signals between the plurality of positioning anchor points and the key.

The processing module 42 is configured to: if one reference anchor point is determined from the plurality of positioning anchor points based on the respective distances between the plurality of positioning anchor points and the key, correct a distance between the key and a positioning anchor point adjacent to the one reference anchor point to obtain a corrected distance, where the reference anchor point indicates that a transmission mode of a ranging signal between the reference anchor point and the key is line-of-sight wireless transmission LOS.

The processing module 42 is further configured to perform positioning calculation on a distance between the one reference anchor point and the key and the corrected distance to obtain final position information of the key relative to the vehicle.

The operation module 43 is configured to execute a preset action corresponding to both the final position information of the key relative to the vehicle and a control instruction issued by the key.

Optionally, the collection module 41 further includes a Bluetooth (BLE) module 411. The Bluetooth module 411 is configured to broadcast a BLE broadcast signal and also configured to measure a distance from the key with Bluetooth technology.

The specific implementation principle and technical effect of the control apparatus provided by the embodiment of the present application are similar to the specific implementation principle and technical effect of the embodiment shown in FIG. 7, which will not be repeated here.

An embodiment of the present application also provides a control apparatus. FIG. 12 is a second structural diagram of a control apparatus provided by an embodiment of the present application. As shown in FIG. 12, the control apparatus includes a processor 51 and a memory 52, and the memory 52 stores instructions executable by the processor 51, so that the processor 51 can be used to execute the technical solution of the above-mentioned method embodiments, and the implementation principle and technical effect thereof are similar, which will not be repeated here. It should be understood that the above-mentioned processor 51 can be a central processing unit (Central Processing Unit, referred to as: CPU), or other general-purpose processors, digital signal processors (Digital Signal Processor, referred to as: DSP), application-specific integrated circuits (Application Specific Integrated Circuit, referred to as: ASIC), etc. The general-purpose processor can be a microprocessor or the processor can also be any conventional processor, etc. The steps of the method disclosed in the invention can be directly embodied as being executed by a hardware processor, or executed by a combination of hardware and software modules in the processor. The memory 52 may include a high-speed random access memory (Random Access Memory, referred to as: RAM), and may also include a non-volatile memory (Non-volatile memory, referred to as: NVM), such as at least one magnetic disk memory, and may also be a USB flash drive, a mobile hard disk, a read-only memory, a magnetic disk or an optical disk, etc.

The embodiment of the present application also provides a storage medium, in which computer executable instructions are stored. When these computer executable instructions are executed by a processor, the above-mentioned vehicle key positioning method is implemented. The storage medium can be implemented by any type of volatile or non-volatile storage device or a combination thereof, such as static random access memory (Static Random-Access Memory, referred to as: SRAM), electrically erasable programmable read-only memory (Electrically-Erasable Programmable Read-Only Memory, referred to as: EEPROM), erasable programmable read-only memory (Erasable Programmable Read-Only Memory, referred to as: EPROM), programmable read-only memory (Programmable Read-Only Memory, referred to as: PROM), read-only memory (Read-Only Memory, referred to as: ROM), magnetic memory, flash memory, magnetic disk or optical disk. The storage medium can be any available medium that can be accessed by a general or special-purpose computer.

An exemplary storage medium is coupled to a processor so that the processor can read information from the storage medium and write information to the storage medium. Of course, the storage medium can also be a component of the processor. The processor and the storage medium can be located in an application specific integrated circuit (Application Specific Integrated Circuits, referred to as: ASIC). Of course, the processor and the storage medium can also exist as discrete components in an electronic device or a main control apparatus.

An embodiment of the present application also provides a program product, such as a computer program, which, when executed by a processor, implements the vehicle key positioning method covered by the present application.

Those of ordinary skill in the art can understand that all or part of the steps of implementing the above-mentioned method embodiments can be completed by hardware related to program instructions. The aforementioned program can be stored in a computer-readable storage medium. When the program is executed, the steps of the above-mentioned method embodiments are executed; and the aforementioned storage medium includes: ROM, RAM, magnetic disk or optical disk and other media that can store program codes.

Finally, it should be noted that the above implementations are only used to illustrate the technical solutions of the present invention, rather than to limit it. Although the present invention has been described in detail with reference to the aforementioned implementations, those of ordinary skill in the art should understand that they can still modify the technical solutions described in the aforementioned implementations, or replace some or all of the technical features therein with equivalents. However, these modifications or replacements do not cause the essence of the corresponding technical solutions to deviate from the scope of the technical solutions of the implementations of the present invention.

**Claims**

1. A vehicle key positioning method, comprising:

   after a vehicle completes a communication connection with a key of the vehicle, determining respective distances between a plurality of positioning anchor points of the vehicle and the key, based on respective ranging signals between the plurality of positioning anchor points and the key;
   if one reference anchor point is determined from the plurality of positioning anchor points based on the respective distances between the plurality of positioning anchor points and the key, correcting a distance between a positioning anchor point adjacent to the one reference anchor point and the key to obtain a corrected distance;

   wherein the reference anchor point indicates that a transmission mode of a ranging signal between the reference anchor point and the key is line-of-sight wireless transmission LOS;
   performing positioning calculation on a distance between the one reference anchor point and the key and the corrected distance to obtain final position information of the key relative to the vehicle;
   executing a preset action corresponding to both the final position information of the key relative to the vehicle and a control instruction issued by the key.

2. The method according to claim 1, wherein the positioning anchor point adjacent to the one reference anchor point is a first adjacent anchor point;
   the correcting the distance between the key and the positioning anchor point adjacent to the one reference anchor point to obtain the corrected distance comprises:

   performing positioning calculation on the distance between the one reference anchor point and the key, a distance between the first adjacent anchor point and the key, and a distance between the one reference anchor point and the first adjacent anchor point, to obtain first position information of the key relative to the vehicle;
   performing correction calculation on the distance between the first adjacent anchor point and the key using a preset correction value corresponding to the first position information to obtain the corrected distance of the first adjacent anchor point.

3. The method according to claim 2, wherein the performing positioning calculation on the distance between the one reference anchor point and the key and the corrected distance to obtain the final position information of the key relative to the vehicle comprises:

   if the first position information is located in a preset first area, performing positioning calculation on the distance between the one reference anchor point and the key, the corrected distance of the first adjacent anchor point, and the distance between the one reference anchor point and the first adjacent anchor point to obtain a first positioning result of the key; wherein the first area indicates that an accuracy of a final position of the key is related to one adjacent positioning anchor point of the one reference anchor point;
   determining the first positioning result as the final position information of the key relative to the vehicle.

**4.** The method according to claim 3, wherein another positioning anchor point adjacent to the one reference anchor point is a second adjacent anchor point; the performing positioning calculation on the distance between the one reference anchor point and the key and the corrected distance to obtain the final position information of the key relative to the vehicle comprises:

if the first position information is located in a preset second area, performing positioning calculation on the distance between the one reference anchor point and the key, and a distance between the second adjacent anchor point and the key, and a distance between the one reference anchor point and the second adjacent anchor point, so as to obtain second position information of the key relative to the vehicle; wherein the second area indicates that the accuracy of the final position of the key is related to two adjacent positioning anchor points of the one reference anchor point;
performing correction calculation on the distance between the second adjacent anchor point and the key using a preset correction value corresponding to the second position information to obtain a corrected distance of the second adjacent anchor point;
performing positioning calculation on the distance between the one reference anchor point and the key, the corrected distance of the second adjacent anchor point, and the distance between the one reference anchor point and the second adjacent anchor point to obtain a second positioning result of the key;
determining an average value of the first positioning result and the second positioning result as the final position information of the key relative to the vehicle.

**5.** The method according to any one of claims 2 to 4, wherein the performing positioning calculation on the distance between the one reference anchor point and the key, the distance between the first adjacent anchor point and the key, and the distance between the one reference anchor point and the first adjacent anchor point to obtain the first position information of the key relative to the vehicle comprises:

determining a first local coordinate system by taking a line connecting the one reference anchor point and the first adjacent anchor point as an X-axis and taking the one reference anchor point or the first adjacent anchor point as a coordinate origin;
determining a first local coordinate of the key in the first local coordinate system based on the distance between the one reference anchor point and the key, the distance between the first adjacent anchor point and the key, and the distance between the one reference anchor point and the first adjacent anchor point;
performing coordinate system transformation processing on the first local coordinate to obtain a first coordinate of the key in a preset coordinate system of the vehicle, wherein the first coordinate is the first position information of the key relative to the vehicle.

**6.** The method according to claim 4, wherein the performing positioning calculation on the distance between the one reference anchor point and the key, the corrected distance of the first adjacent anchor point, and the distance between the one reference anchor point and the first adjacent anchor point to obtain the first positioning result of the key comprises:

determining a first local coordinate system by taking a line connecting the one reference anchor point and the first adjacent anchor point as an X-axis and taking the one reference anchor point or the first adjacent anchor point as a coordinate origin;
determining a first corrected local coordinate of the key in the first local coordinate system based on the distance between the one reference anchor point and the key, the corrected distance of the first adjacent anchor point, and the distance between the one reference anchor point and the first adjacent anchor point;
performing coordinate system transformation processing on the first corrected local coordinate to obtain a first corrected coordinate of the key in a preset coordinate system of the vehicle;
the performing positioning calculation on the distance between the one reference anchor point and the key, the corrected distance of the second adjacent anchor point, and the distance between the one reference anchor point and the second adjacent anchor point to obtain the second positioning result of the key comprises:

determining a second local coordinate system by taking a line connecting the one reference anchor point and the second adjacent anchor point as an X-axis and taking the one reference anchor point or the second adjacent anchor point as a coordinate origin;
determining a second corrected local coordinate of the key in the second local coordinate system based on the distance between the one reference anchor point and the key, the corrected distance of the second adjacent anchor point, and the distance between the one reference anchor point and the second adjacent anchor point;

performing coordinate system transformation processing on the second corrected local coordinate to obtain a second corrected coordinate of the key in the preset coordinate system of the vehicle.

7. The method according to claim 6, wherein the determining the average value of the first positioning result and the second positioning result as the final position information of the key relative to the vehicle comprises:

averaging the first corrected coordinate and the second corrected coordinate to obtain a final coordinate of the key in the preset coordinate system of the vehicle.

8. A control apparatus, comprising: a collection module, a processing module and an operation module; wherein,

the collection module is configured to after a vehicle completes a communication connection with a key of the vehicle, determine respective distances between a plurality of positioning anchor points of the vehicle and the key, based on respective ranging signals between the plurality of positioning anchor points and the key;

the processing module is configured to: if one reference anchor point is determined from the plurality of positioning anchor points based on the respective distances between the plurality of positioning anchor points and the key, correct a distance between the key and a positioning anchor point adjacent to the one reference anchor point to obtain a corrected distance; wherein the reference anchor point indicates that a transmission mode of a ranging signal between the reference anchor point and the key is line-of-sight wireless transmission LOS;

the processing module is further configured to perform positioning calculation on a distance between the one reference anchor point and the key and the corrected distance to obtain final position information of the key relative to the vehicle;

the operation module is configured to execute a preset action corresponding to both the final position information of the key relative to the vehicle and a control instruction issued by the key.

9. A control apparatus, comprising:

a processor and a memory; wherein,
the memory stores executable instructions executable by the processor; and
the processor executes the executable instructions stored in the memory, so that the processor executes the method according to any one of claims 1 to 7.

10. A storage medium, wherein the storage medium stores computer-executable instructions, and the computer-executable instructions, when executed by a processor, are used to implement the method according to any one of claims 1 to 7.

FIG. 1a

FIG. 1b

EP 4 654 688 A1

FIG. 2

Determining a third local coordinate of the key in a third local coordinate system corresponding to two determined adjacent reference anchor points based on respective distances between the two determined adjacent reference anchor points and the key — S101

Performing coordinate system transformation processing on the third local coordinate to obtain a final coordinate of the key in a preset coordinate system of the vehicle — S102

FIG. 3

Key A

Key A
eSE
BLE
UWB

X

Positioning anchor point

UWB4

UWB3

Vehicle A

Y

Control apparatus    21

UWB1

UWB2

FIG. 4

FIG. 5

FIG. 6

After a vehicle completes a communication connection with a key of the vehicle, determining respective distances between a plurality of positioning anchor points of the vehicle and the key, based on respective ranging signals between the plurality of positioning anchor points and the key — S201

If one reference anchor point is determined from the plurality of positioning anchor points based on the respective distances between the plurality of positioning anchor points and the key, correcting a distance between a positioning anchor point adjacent to the one reference anchor point and the key to obtain a corrected distance — S202

Performing positioning calculation on a distance between the one reference anchor point and the key and the corrected distance to obtain final position information of the key relative to the vehicle — S203

Executing a preset action corresponding to both the final position information of the key relative to the vehicle and a control instruction issued by the key — S204

FIG. 7

FIG. 8

FIG. 9

Start outside-of-vehicle key positioning

Obtain the following information of four positioning anchor points of the vehicle: state identifiers, ToFs, and RSSIs

Wait for positioning process to initiate (Wait timer tick)

Sort ToFs of the four positioning anchor points in ascending order to obtain an anchor point sequence

Use the first and second positioning anchor points in the anchor point sequence to perform dual-anchor point positioning of the key to obtain a key coordinate (x1, y1)

Is (x1, y1) located within an anchor point preset area?

No

Yes

Correct a distance corresponding to the second positioning anchor point in the anchor point sequence

Perform the dual-anchor point positioning of the key to obtain a key coordinate (x2, y2)

Is (x1, y1) located within the second area?

No

Yes

Correct a distance corresponding to the third positioning anchor point in the anchor point sequence

Perform dual-anchor point positioning of the key to obtain a key coordinate (x3, y3)

Calculate final position information (x, y) of the key, according to x=(x2+x3)/2 and y=(y2+y3)/2

Output the final position information (x, y) of the key

FIG. 10

Collection module — 41

Bluetooth module — 411

Processing module — 42

Operation module — 43

Control apparatus

FIG. 11

Memory — 52

Processor — 51

Control apparatus

FIG. 12

## INTERNATIONAL SEARCH REPORT

| International application No. |
| --- |
| **PCT/CN2023/130304** |

| A. | CLASSIFICATION OF SUBJECT MATTER |
| --- | --- |

H04W64/00(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VCN, DWPI, CNKI, IEEE: 车, 钥匙, 定位, 精度, 准确, 精准, 精确, 基准, 锚点, 非视距, 非LOS, 测距, 距离, 修正, 校正, vehicle, key, locat+, accurat+, anchor, LOS, NLOS, distance, correct

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116782380 A (ZHEJIANG GEELY AUTOMOBILE HOLDINGS LIMITED et al.) 19 September 2023 (2023-09-19)<br>claims 1-10 | 1-10 |
| Y | CN 115348538 A (YUANFENG TECHNOLOGY CO., LTD.) 15 November 2022 (2022-11-15)<br>description, paragraphs [0034]-[0056] | 1, 8-10 |
| Y | CN 109946648 A (SOUTHEAST UNIVERSITY) 28 June 2019 (2019-06-28)<br>description, paragraphs 0035-0053, and figure 3 | 1, 8-10 |
| A | US 2015245311 A1 (RICOH CO., LTD.) 27 August 2015 (2015-08-27)<br>entire document | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 February 2024** | **08 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/130304**

| Patent document cited in search report | | | Publication date (day/month/year) | Patent family member(s) | | | Publication date (day/month/year) |
|---|---|---|---|---|---|---|---|
| CN | 116782380 | A | 19 September 2023 | None | | | |
| CN | 115348538 | A | 15 November 2022 | None | | | |
| CN | 109946648 | A | 28 June 2019 | WO | 2020177225 | A1 | 10 September 2020 |
| | | | | US | 2022179061 | A1 | 09 June 2022 |
| US | 2015245311 | A1 | 27 August 2015 | JP | 2015158492 | A | 03 September 2015 |
| | | | | CN | 104869585 | A | 26 August 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310725924